Europäisches Patentamt

European Patent Office

Office européen des brevets

(19)

(11) Veröffentlichungsnummer : **0 365 952 B1**

# (12) EUROPÄISCHE PATENTSCHRIFT

(45) Veröffentlichungstag der Patentschrift :
**02.09.92 Patentblatt 92/36**

(51) Int. Cl.⁵ : **A22C 13/02**

(21) Anmeldenummer : **89119115.7**

(22) Anmeldetag : **14.10.89**

(54) **Geraffter Verpackungsschlauch.**

(30) Priorität : **22.10.88 DE 8813273 U**

(43) Veröffentlichungstag der Anmeldung :
**02.05.90 Patentblatt 90/18**

(45) Bekanntmachung des Hinweises auf die
Patenterteilung :
**02.09.92 Patentblatt 92/36**

(84) Benannte Vertragsstaaten :
**AT BE CH DE FR GB IT LI NL SE**

(56) Entgegenhaltungen :
**EP-A- 0 021 189**
**EP-A- 0 027 592**
**EP-A- 0 066 193**
**DE-U- 8 814 184**

(56) Entgegenhaltungen :
**FR-A- 2 332 908**
**FR-A- 2 336 316**
**GB-A- 1 043 435**
**US-A- 4 346 738**

(73) Patentinhaber : **HOECHST**
**AKTIENGESELLSCHAFT**
**Postfach 80 03 20**
**W-6230 Frankfurt am Main 80 (DE)**

(72) Erfinder : **Neeff, Rainer, Dr.**
**Am Schlosspark 85**
**W-6200 Wiesbaden (DE)**
Erfinder : **Lenhart, Richard**
**Dahlemweg 4**
**W-6200 Wiesbaden (DE)**
Erfinder : **Sattler, Helmut**
**Freudenbergstrasse 36**
**W-6200 Wiesbaden (DE)**

EP 0 365 952 B1

## Beschreibung

Die Erfindung bezieht sich auf einen zylinderförmigen Hohlstab mit einer im Querschnitt kreisförmigen Innenbohrung, die an den beiden Stirnflächen des Hohlstabs in kreisförmigen Hohlraumöffnungen endet, bestehend aus einem gerafften Verpackungsschlauch, insbesondere aus einer gerafften künstlichen Wursthülle, in Kombination mit einer den Hohlstab unter Freilassung der Hohlraumöffnungen umgebenden Umhüllung, und einem ringförmigen Körper an einer der beiden Hohlraumöffnungen. Als Wursthüllen verwendete Hohlstäbe dieser Art werden auch als Raupen, ihre schlauchförmige äußere Umhüllung als Stützhülle bezeichnet.

Eine Kombination aus Raupe und Stützhülle wird beispielsweise in der EP-B-0 004 638 beschrieben. Bei dieser Anordnung werden beide Hohlraumöffnungen an den Stirnflächen des Hohlstabes bewußt frei gelassen, damit das Füllrohr in die Innenbohrung des Hohlstabes eingeführt werden kann, ohne daß die äußere Umhüllung vorher entfernt werden muß. Diese Anordnung zeigt jedoch den Nachteil, daß die äußere Stützhülle und die darin angeordnete Raupe beim Füllvorgang nicht auf dem Füllrohr befestigt sind. Wenn während des Füllvorgangs der Verpackungsschlauch durch die eingepreßte Wurstmasse vom Füllrohr abgezogen und hierbei entrafft wird, besteht die Gefahr, daß die nicht befestigte Stützhülle in der gleichen Richtung abgezogen wird und dabei in die Bremse gerät, welche bekanntlich in der Nähe der Füllrohröffnung angeordnet ist und die Aufgabe hat, den entrafften Verpackungsschlauch auf das Füllrohr anzupressen und dadurch den Abzug des Verpackungsschlauches zu verzögern.

Diesen Nachteil soll die EP-B-0 027 592 (Fig. 1) durch einen Gummiring beseitigen, der von einer netzartigen Stützhülle umschlungen wird. Beim Füllvorgang wird die Stützhülle am gegenüberliegenden Ende geöffnet, dadurch wird die Spannung des Gummirings gelockert. Der Gummiring legt sich dann um das Füllrohr und soll auf diese Weise die Stützhülle auf dem Füllrohr festhalten. Eine besonders feste Fixierung der Stützhülle wird durch den Gummiring allerdings nicht erreicht, so daß auch bei dieser Ausführungsform die Gefahr besteht, daß die netzartige Stützhülle in die Darmbremse eingezogen wird.

Die Erfindung geht aus von der Anordnung der EP-B-0 0 66 193 (Fig. 2), die ebenfalls die Fixierung einer netzartigen Stützhülle am Füllrohr gestattet. Nach diesem Stand der Technik wird eine der beiden Hohlraumöffnungen des Hohlstabes durch die Umhüllung in einer kreisförmigen Fläche verengt, so daß die Durchgangsöffnung an dieser Stirnfläche des Hohlstabes einen Radius aufweist, der kleiner ist als der Radius der Innenbohrung des Hohlstabes. Diese Verengung der Hohlraumöffnung erfolgt durch einen flexiblen Ring, der durch einen zurückgefalteten Abschnitt der Umhüllung in seiner Stellung gehalten wird. Dieser Ring besteht aus einem ringförmigen, radial nach außen sich erstreckenden Flanschteil, welches an der Stirnseite der Raupe anliegt, und einem ringförmigen Hülsenabschnitt mit mehreren Haltefingern, welche die Umhüllung gegen das Füllrohr anpressen (Fig. 4 der EP-B-0 066 193).

Es ist jedoch auch bekannt, daß der Querschnitt der Innenbohrung von gerafften Verpackungsschläuchen immer möglichst gering sein soll, weil dann für die Falten des Verpackungsschlauches ein größerer Raum zur Verfügung steht und das Verhältnis aus ungeraffter Schlauchlänge zur Länge des Hohlstabs besonders groß wird. Es wird deshalb beim Raffen der Schlauchhülle ein Raffdorn verwendet, dessen Durchmesser möglichst klein ist und etwa dem Durchmesser des Füllrohrs entspricht, so daß der geraffte Schlauch mit seiner dem Raffdorndurchmesser entsprechenden Innenbohrung gerade noch auf das Füllrohr aufgeschoben werden kann. Wird nun ein Ring, entsprechend der EP-B-0 066 193, mit einem ringförmigen Hülsenabschnitt in das Raupenende eingesetzt, muß die Raupe entweder eine größere Innenbohrung aufweisen, damit für den Hülsenabschnitt des Rings der erforderliche Platz vorhanden ist, oder es besteht Gefahr, daß die Schlauchfalten in diesem Bereich durch den Hülsenabschnitt beschädigt werden. Weitere Nachteile bestehen darin, daß sich der Hülsenabschnitt beim Aufbringen der Raupe auf das Füllrohr nur schwer über die Füllrohroberfläche schieben läßt und andererseits aber keinen besonderen Halt bietet, außerdem ist die Herstellung dieses Ringes, bestehend aus Flanschteil und Hülsenabschnitt, relativ aufwendig und erfordert viel Material.

Ausgehend von diesem Stand der Technik besteht somit die Aufgabe der Erfindung darin, einen verbesserten ringförmigen Körper anzugeben, der aufgrund seiner Anordnung und seiner Gestalt die Gefahr einer Beschädigung des Hohlstabes ausschließt und eine einfache und feste Arretierung der Stützhülle am Füllrohr gestattet, ohne daß Probleme beim Aufschieben auf das Füllrohr auftreten. Der ringförmige Körper soll ferner einfach und billig herstellbar sein. Eine weitere Aufgabe besteht darin, die Kombination aus Hohlstab und Stützhülle so zu modifizieren, daß zwischen dem gerafften Verpackungsschlauch und der Umgebung kein Feuchtigkeitsaustausch möglich ist.

Diese Aufgabe wird erfindungsgemäß durch den Gegenstand mit den in Anspruch 1 genannten Merkmalen gelöst. Die abhängigen Ansprüche geben besondere Ausführungsformen an.

Die Erfindung umfaßt somit einen Hohlstab aus einem gerafften Verpackungsschlauch, der vorzugsweise allseitig, d.h. auf seinem kreiszylinderförmigen Außenumfang und auch an den beiden Stirnflächen, von einer Umhüllung umgeben ist. Der geraffte Verpackungsschlauch ist insbesondere eine geraffte künstliche Wursthülle und besteht vor allem aus Cellulose oder faserverstärkter Cellulose. Diese wird zum Füllen mit Wurstmasse im gerafften Zustand auf das Füllrohr einer Füllmaschine aufgeschoben. Durch das Einpressen von Wurstmasse wird die Wursthülle vom gerafften Teil abgezogen und entfältelt. Wegen des gerafften Zustandes läßt sich eine größere Schlauchlänge ohne Unterbrechung des Füllprozesses zu Würsten verarbeiten.

Die äußere Umhüllung dient als Stützhülle für den gerafften Verpackungsschlauch. Sie ist schlauchförmig und wird beispielsweise durch eine bahnförmige Folie gebildet, die um den Außenumfang des Hohlstabs gewickelt ist, wobei die sich überlappenden Ränder miteinander verbunden sind, beispielsweise durch eine längsaxiale Schweißnaht. In gleicher Weise können zwei übereinanderliegende bahnförmige Folien zur Umhüllung des dazwischen liegenden gerafften Verpackungsschlauches verwendet werden, wobei in entsprechender Weise zwei längsaxiale Schweißnähte gebildet werden. Im allgemeinen können auch nahtlose Schläuche als Umhüllung dienen. Die Umhüllung wird in einzelnen diskreten Längen hergestellt oder von einer Schlauchlänge in Einzelabschnitten abgetrennt.

Die Umhüllung ist an den Stirnflächen des Hohlstabs um die letzten Falten des gerafften Verpackungsschlauches herumgezogen und umfaßt den ringförmigen Körper. Sie erstreckt sich bis in die Nähe der beiden kreisförmigen Öffnungen des durch die Innenbohrung des Hohlstabs gebildeten Hohlraums, die als Hohlraumöffnungen bezeichnet werden.

Die als Umhüllung verwendete Folie besteht beispielsweise aus hitzeschrumpffähigem Kunststoff, d.h. einem Folienmaterial, das ein latentes Schrumpfvermögen von mehr als 5, insbesondere mehr als 10 % in Längs- und/oder Querrichtung aufweist, welches bei erhöhter Temperatur ausgelöst wird. Nach dem Umhüllen des gerafften Verpackungsschlauches mit der hitzeschrumpffähigen Kunststoffolie wird unter Hitzeeinwirkung, z.B. durch Warmluft oder Heizstrahler, der Schrumpf der Folie ausgelöst. Die Folie legt sich eng und fest um den Außenumfang des Hohlstabs und drückt den ringförmigen Körper gegen die benachbarte Stirnfläche des Hohlstabs. Am Außenumfang des Hohlstabs, der infolge der aneinanderliegenden Falten des gerafften Verpackungsschlauches eine wellige Oberfläche aufweist, folgt die aufgeschrumpfte Umhüllung dieser Oberflächenstruktur des Hohlstabes, die geschrumpfte Kunststoffolie erstreckt sich über jede einzelne Falte und bis in die Zwischenräume zwischen den Falten des gerafften Verpackungsschlauches, so daß die einzelnen Falten von der Kunststoffolie festgehalten werden. Die geschrumpfte Kunststoffolie hat gewöhnlich eine relativ geringe Dicke, so daß die Faltenstruktur am Außenumfang des Hohlstabs durch die Kunststoffolie hindurch sichtbar bleibt. Dieser enge Kontakt zwischen äußerer Umhüllung und den Falten des gerafften Verpackungsschlauches am Außenumfang des Hohlstabs hat den Vorteil, daß beim Füllprozeß der noch nicht entraffte Teil des Verpackungsschlauches von der äußeren Umhüllung in seiner Position festgehalten wird und somit nicht vom ablaufenden, sich entraffenden Schlauch in Richtung auf und in die Schlauchbremse an der Füllrohröffnung gezogen werden kann. Der noch nicht entraffte Teil des Verpackungsschlauches ist somit innerhalb der Umhüllung nicht frei beweglich, sondern wird von der Umhüllung an seinem Außenumfang fixiert.

Anstelle einer Folie aus hitzeschrumpffähigem Material kann auch eine Folie aus elastisch deformierbarem Material verwendet werden. Sie wird beim Überziehen des Hohlstabs stark aufgedehnt und legt sich dann nach dem Entspannen in gleicher Weise wie die hitzegeschrumpfte Folie eng um die Falten des Verpackungsschlauches.

In bevorzugter Ausführungsform wird ein geraffter Verpackungsschlauch verwendet, der vor dem Austrocknen geschützt werden muß, insbesondere eine gegebenenfalls faserverstärkte Cellulosehülle, die einen erhöhten Feuchtigkeitsgehalt von über 15 Gew.-%, bezogen auf das Gesamtgewicht des Verpackungsschlauches, aufweist und deshalb ohne weitere Wässerung ausreichende Geschmeidigkeit und Dehnfähigkeit für den Füllvorgang aufweist. Für diesen Zweck wird eine wasserundurchlässige Folie als Stützhülle verwendet, die geschlossen ist, d.h. keine Perforationen aufweist. Geeignete Folien bestehen z.B. aus Polyvinylidenchlorid, Polyvinylchlorid, Polyolefinen wie Polyethylen und Polypropylen und Polyester. Die beiden Hohlraumöffnungen des Hohlstabes werden dann wasserdicht verschlossen, beispielsweise durch Kappen oder Deckel, insbesondere durch selbstklebende, wieder lösbare Folien, die als Etiketten mit Haftklebstoffschichten bekannt sind. Soll die geraffte Hülle dagegen noch mit Wasser befeuchtet werden, so wird als Umhüllung ein Netz oder eine mit Durchbrechungen versehene Folie verwendet, damit die äußere Umfangsfläche des Hohlstabs leichter Wasser aufsaugen kann.

An dem einen Ende des Hohlstabs befindet sich ein ringförmiger Körper in Form einer ringförmigen Scheibe. Ihr Außenumfang entspricht maximal dem Außenumfang des zylinderförmigen Hohlstabs. Der Außenumfang ist vorzugsweise kreisförmig, kann jedoch auch die Form eines Vielecks aufweisen. Die Breite des Außenumfangs entspricht etwa der Dicke der Scheibe. Diese Dicke ist vergleichsweise gering im Vergleich zum Scheibendurchmesser und ist üblicherweise 1 mm oder kleiner, während der Scheibendurchmesser mehrere Zentimeter beträgt. Die Innenbohrung der Scheibe ist zweckmäßigerweise in zentraler Lage vorhanden und zeigt einen Querschnitt, der es ermöglicht, das Füllrohr einer Füllmaschine durch die Scheibe in das Innere des Hohlstabs einzuführen. Die Innenbohrung der Scheibe zeigt jedoch eine kleinere Öffnungsweite als der kreisförmige Querschnitt der Innenbohrung des Hohlstabes, wodurch der Zugang zur Hohlraumöffnung des Hohlstabes verengt wird. Die Breite der Innenbohrung entspricht etwa der Dicke der Scheibe oder ist sogar geringer als die Dicke der Scheibe.

Die Scheibe umfaßt zwei Seitenflächen, die sich von der Innenbohrung zum Außenumfang erstrecken, einen vorzugsweise ringförmigen Außenumfang und eine Innenbohrung. Die beiden Seitenflächen sind vorzugsweise plan und erstrecken sich parallel oder annähernd parallel zueinander und senkrecht oder annähernd senkrecht zur Längsachse des Hohlstabs. Die beiden Seitenflächen und der Außenumfang zeigen somit im Querschnitt in Richtung der Hohlstablängsachse ein U-förmiges Profil. Es ist jedoch auch möglich, daß die Seitenflächen und gegebenenfalls auch der Außenumfang der Scheibe in diesem Querschnitt gebogene Form aufweisen.

Die Scheibe liegt mit ihrer inneren Seitenfläche unmittelbar an der benachbarten Stirnfläche des Hohlstabs eng an und schützt auf diese Weise die Endfalten an diesem Ende des Hohlstabs vor Druck- und Stoßbelastung. Die den gerafften Verpackungsschlauch umgebende Umhüllung erstreckt sich über den Außenumfang der Scheibe und anschließend in Richtung auf die Längsachse des Hohlstabs über die äußere Seitenfläche der Scheibe, wobei die äußere Seitenfläche teilweise oder vollständig bedeckt ist. Infolge der Abdeckung der äußeren Seitenfläche der Scheibe durch die Umhüllung wird die Scheibe festgehalten. Es ist deshalb erforderlich, die äußere Seitenfläche der Scheibe und ihre Abdeckung durch die Umhüllung in entsprechender Weise zu dimensionieren. Der freie Durchgang durch den vorzugsweise kreisförmigen Querschnitt der Innenbohrung der Scheibe bleibt erhalten, die Umhüllung erstreckt sich nicht bis in die Innenbohrung.

Die Seitenwand der Innenbohrung der Scheibe ist in der Weise ausgestaltet, daß die Scheibe auf einem zylinderförmigen Füllrohr, welches durch die Innenbohrung des Hohlstabes geschoben ist, lösbar fixiert wird. Die Innenbohrung ist somit geeignet, mit ihrer Seitenwand am Außenumfang eines Füllrohrs in reibschlüssigen oder kraftschlüssigen Kontakt zu treten, wobei sich die Verbindung zwischen Füllrohr und Scheibe von Hand herstellen und wieder lösen läßt. Für diesen Zweck sind in der Seitenwand der Innenbohrung der Scheibe Elemente vorgesehen, insbesondere einzelne Erhebungen wie Einsprünge, Stege oder Noppen, die sich aus der Seitenwand der Innenbohrung der Scheibe in Richtung auf die zentrale Längsachse des Hohlstabes erstrecken. Die Erhebungen in der Innenbohrung der Scheibe verringern die freie Durchgangsfläche und bilden zusammen in Teilbereichen der Innenbohrung der Scheibe einen Innenumfang, welcher kleiner ist als der Außenumfang des Füllrohrs. Um die Scheibe überhaupt auf das Füllrohr aufschieben zu können, müssen deshalb diese Elemente in der Innenbohrung der Scheibe ausreichend flexibel sein, damit sie sich beim Aufschieben auf das Füllrohr seitlich, in Gegenrichtung zur Fortbewegung auf dem Füllrohr, umbiegen können.

In bevorzugter Ausführungsform wird zur Fixierung der Scheibe eine trichterförmig sich verjüngende Seitenwand in der Innenbohrung vorgesehen, wobei sich der Radius bzw. der Umfang der kreisförmigen Innenbohrung in Richtung auf den Hohlstab stetig oder unstetig verringert und ein Minimum erreicht. Es ist besonders vorteilhaft, wenn sich Radius bzw. Umfang der kreisförmigen Innenbohrung von der äußeren Seitenfläche der Scheibe in Richtung auf die Innenbohrung des Hohlstabes allmählich verringert, wobei der Radius bzw. der Umfang das Minimum an der inneren Seitenfläche der Scheibe erreicht. Durch den stetig sich verringernden Radius in der Innenbohrung der Scheibe wird die Scheibendicke reduziert, so daß in diesem Bereich mit abnehmendem Radius der Innenbohrung die Flexibilität und Biegefähigkeit der Scheibe zunimmt.

In dieser Ausführungsform zeigt die Innenbohrung der Scheibe eine kegelstumpfförmige Seitenwand, zumindest in einem Teilbereich der Seitenwand, die sich symmetrisch zur zentralen Längsachse des Hohlstabes verjüngt.

Beim Aufschieben des umhüllten Hohlstabs auf das Füllrohr einer Füllmaschine wird er so gehalten, daß das Füllrohr zuerst durch die Innenbohrung der Scheibe geführt wird, so daß die Scheibe am Füllrohrende, welches der Füllrohröffnung gegenüberliegt, auf der Außenseite des Füllrohrs befestigt wird.

Im Bereich des geringsten Radius bzw. Umfangs der Innenbohrung der Scheibe wird beim Aufschieben des Hohlstabes auf das Füllrohr die Innenbohrung in Gegenrichtung zur Fortbewegung, d.h. in Füllrichtung, axial deformiert und umgebogen und verharrt in diesem Zustand. Wenn beim Abziehen des Verpackungsschlauches während des Füllvorgangs auf die Umhüllung eine Zugkraft in Füllrichtung ausgeübt wird, verhindert die Scheibe durch den festen Sitz auf dem Füllrohr, daß auch die Umhüllung in Füllrichtung weggezogen wird. Dadurch besteht keine Gefahr, daß die Umhüllung, gegebenenfalls zusammen mit dem umhüllten, noch nicht entrafften Teil des Verpackungsschlauchs, in die an der Füllrohröffnung angeordnete Bremse eingezogen wird.

Die Scheibe erfordert keine besonderen mechanischen Eigenschaften und kann aus billigem Kunststoffmaterial hergestellt werden, z.B. durch Ausstanzen und Hitzeverpressung von Folienzuschnitten.

Die Erfindung wird anhand der Fig. 1 bis 7 sowie 3a bis 6a näher erläutert. Es zeigt

Fig. 1 einen umhüllten Hohlstab in Seitenansicht, teilweise im Schnitt,

Fig. 2 den umhüllten Hohlstab der Fig. 1 beim Füllvorgang,

Fig. 3, 4, 5 und 6 einen vergrößerten Ausschnitt der Innenbohrung der in Fig. 1 gezeigten Scheibe mit verschiedenen Ausführungsformen der Innenbohrung,

Fig. 3a, 4a, 5a und 6a einen vergrößerten Ausschnitt der in Fig. 2 gezeigten Scheibe mit verschiedenen Ausführungsformen der Innenbohrung,

Fig. 7 zeigt die Scheibe der Fig. 6 in Frontansicht.

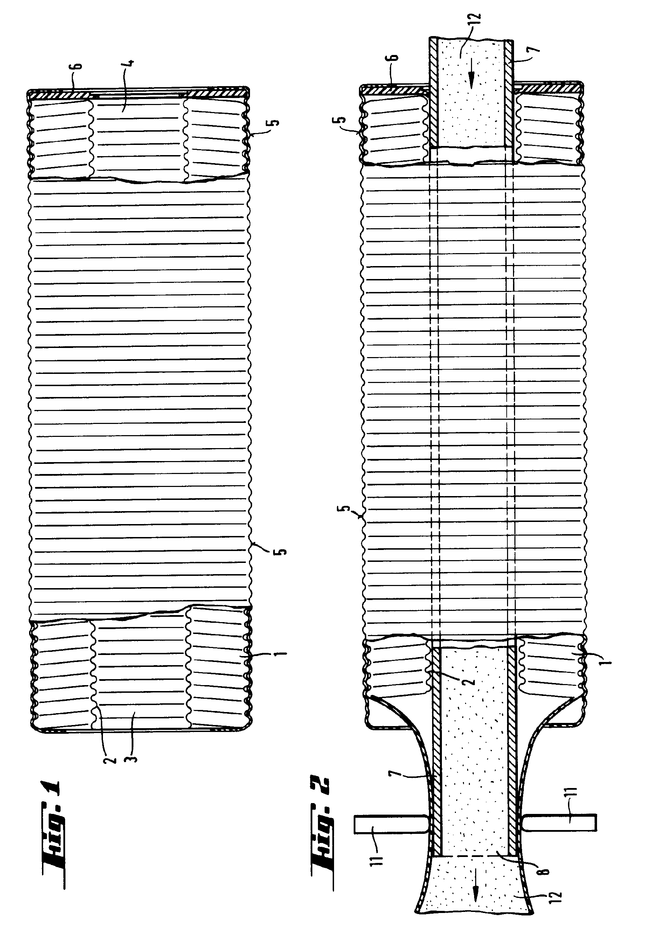

In Fig. 1 zeigt der zylinderförmige Hohlstab 1 aus gerafftem Verpackungsschlauch eine Innenbohrung 2 und Hohlraumöffnungen 3 und 4. Er ist versehen mit einer äußeren Umhüllung 5, welche den Außenumfang des Hohlstabs und teilweise die äußere Seitenfläche einer ringförmigen Scheibe 6 umgibt. Die innere Seitenfläche der Scheibe 6 liegt eng und unmittelbar an der Stirnfläche des Hohlstabes 1 an.

In Fig. 2 ist die Scheibe 6 mit ihrer Innenbohrung auf der äußeren Umfangsfläche des Füllrohrs 7 fixiert. In der Nähe der Füllrohröffnung 8 befindet sich eine nur schematisch gezeigte Schlauchbremse 11, welche den entrafften Verpackungsschlauch gegen das Füllrohr 7 anpreßt und damit den Ablauf des Schlauches unter Einpressen der Wurstmasse 12 verzögert.

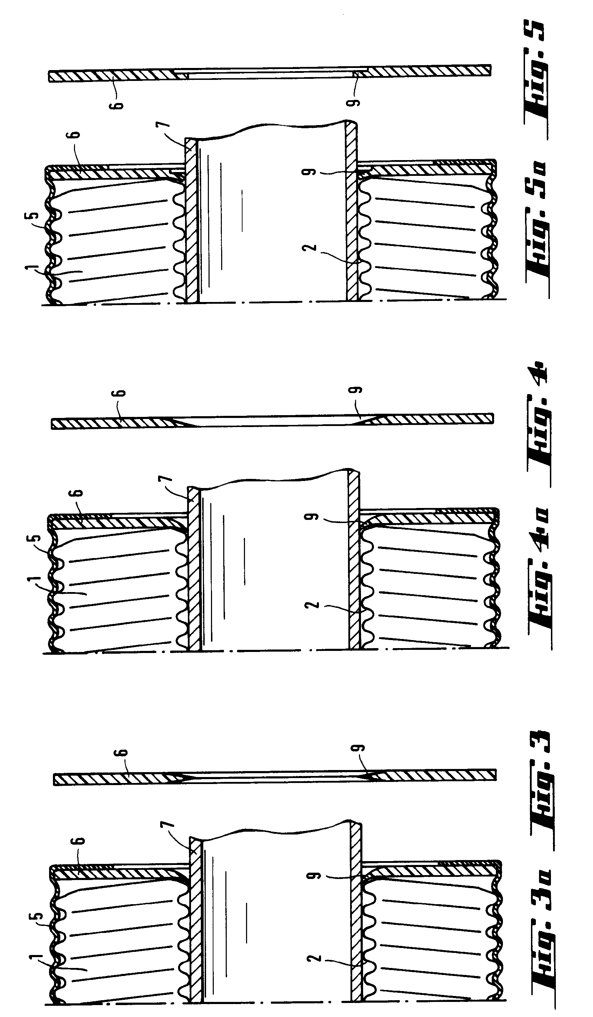

Verschiedene Ausführungsformen der Innenbohrung der Scheibe 6 sind in Fig. 3, 4, 5 und 6 in vergrößertem Maßstab dargestellt. Das Element zur Fixierung der Scheibe 6 auf dem Füllrohr 7 ist in Fig. 3, 4 und 5 eine ringförmige Erhebung 9, wobei sich der Radius der Innenbohrung von der äußeren Seitenfläche zur inneren Seitenfläche der Scheibe 6, d.h. in Richtung auf die Innenbohrung des Hohlstabes, verringert. Die Innenbohrung der Scheibe 6 bildet bei der Ausführungsform der Fig. 3 und 4 eine symmetrische sich verjüngende, kegelstumpfförmige Fläche, in Fig. 5 ist die ringförmige Erhebung abgestuft ausgebildet.

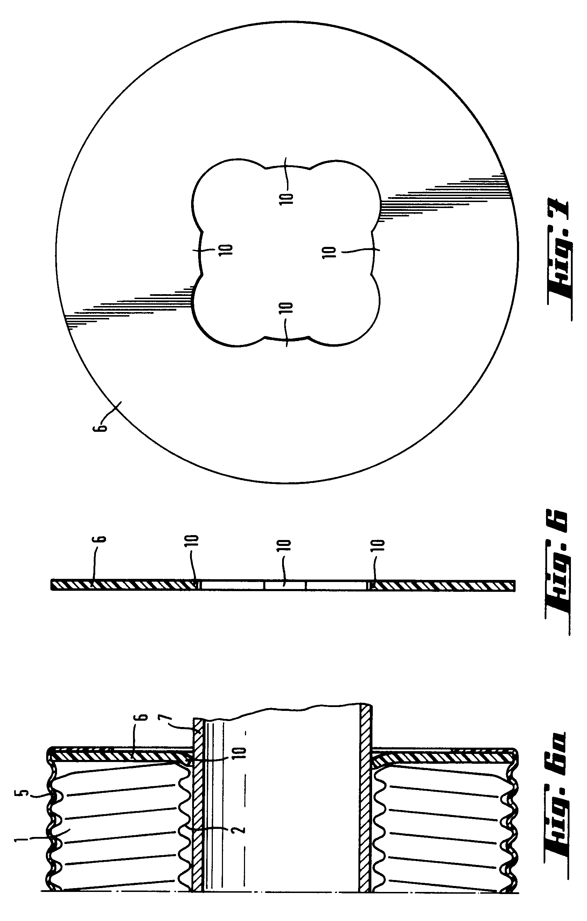

In der Ausführungsform der Fig. 6 zeigt die Innenbohrung der Scheibe 6 nur in Teilbereichen einen verringerten Radius bzw. Umfang, nämlich im Bereich der Einzelelemente 10, die auf die zentrale Symmetrieachse gerichtet sind. Dies wird durch die Frontansicht in der Fig. 7 deutlich gemacht. Die Fig. 3a bis 6a zeigen die in Fig. 3 bis 6 dargestellten Ausführungsformen der Scheibe in der in Fig. 2 dargestellten Position. Es werden die gleichen Bezugsziffern für gleiche Elemente verwendet.

Der umhüllte Hohlstab der Erfindung zeigt den Vorteil, daß der geraffte Verpackungsschlauch durch die besondere Anordnung und Ausbildung des ringförmigen Körpers als Scheibe nicht beschädigt werden kann. Die Scheibe 6 läßt sich problemlos auf das Füllrohr 7 aufschieben, wobei die Elemente 9 bzw. 10 sich leicht umbiegen lassen, und ist fest am Füllrohr fixierbar. Beim Füllvorgang wird der noch nicht entfältelte Rest des Hohlstabs in der durch die Scheibe lagefixierten Umhüllung zurückgehalten, so daß der noch geraffte Rest des Verpackungsschlauches beim Füllvorgang nicht in die Bremse eingezogen werden kann. Außerdem werden Kaliberschwankungen beim Füllvorgang, besonders, wenn auf den abgezogenen Verpackungsschlauch geringe Bremskräfte einwirken, vermieden.

## Patentansprüche

1. Zylinderförmiger Hohlstab (1) mit einer im Querschnitt kreisförmigen Innenbohrung (2), die an den beiden Stirnflächen des Hohlstabs in Hohlraumöffnungen (3,4) endet, bestehend aus einem gerafften Verpackungsschlauch, insbesondere aus einer gerafften künstlichen Wursthülle, in Kombination mit einer den Hohlstab unter Freilassung der Hohlraumöffnungen umgebenden Umhüllung (5), und einem ringförmigen Körper (6) an einer der beiden Hohlraumöffnungen (3,4), dadurch gekennzeichnet, daß der ringförmige Körper aus einer ringförmigen Scheibe (6) besteht, daß diese Scheibe (6) mit ihrer inneren Seitenfläche unmittelbar an der benachbarten Stirnfläche des Hohlstabs (1) anliegt, daß die äußere Seitenfläche der Scheibe zumindest teilweise von der Umhüllung (5) umgeben ist und daß die Innenbohrung der Scheibe (6) von der Umhüllung (5) frei bleibt und Elemente (9,10) zur Befestigung der Scheibe auf einem zylinderförmigen Füllrohr aufweist.

2. Hohlstab nach Anspruch 1, dadurch gekennzeichnet, daß sich der Radius der kreisförmigen Innenbohrung der Scheibe (6) in Richtung auf die Innenbohrung (2) des Hohlstabes, (1) vorzugsweise konisch oder abgestuft, verringert.

3. Hohlstab nach Anspruch 2, dadurch gekennzeichnet, daß die Innenbohrung der Scheibe (6) eine trichterförmige Seitenwand zumindest in einem Teilbereich der Innenbohrung aufweist, die sich symmetrisch zur zentralen Längsachse des Hohlstabes (1) verjüngt, wobei sich der Radius der kreisförmigen Innenbohrung der Scheibe (6) in Richtung auf die Innenbohrung des Hohlstabes (1) verkleinert.

4. Hohlstab nach Anspruch 2, dadurch gekennzeichnet, daß die Innenbohrung der Scheibe (6) nur in Teilbereichen einen verringerten Radius aufweist.

5

5. Hohlstab nach Anspruch 4, dadurch gekennzeichnet, daß die Innenbohrung der Scheibe (6) durch über ihre Seitenwand verteilte Einzelelemente (10) wie Einsprünge, Stege oder Noppen einen verringerten Radius aufweist.

6. Hohlstab nach einem der Ansprüche 1 bis 5, dadurch gekennzeichnet, daß der Hohlstab (1) von einer aufgeschrumpften, vorzugsweise feuchtigkeitsundurchlässigen Kunststoffolie umgeben wird.

7. Hohlstab nach einem der Ansprüche 1 bis 6, dadurch gekennzeichnet, daß der Hohlstab (1) von einem elastisch deformierbaren Material umgeben wird.

8. Hohlstab nach einem der Ansprüche 1 bis 7, dadurch gekennzeichnet, daß der geraffte Verpackungsschlauch aus Cellulose besteht, die aufgrund ihres erhöhten Wassergehaltes vor dem Füllen mit Wurstmasse keiner weiteren Wässerung unterworfen werden muß, daß die Umhüllung (5) aus einer wasserundurchlässigen Folie besteht und daß die Hohlraumöffnungen (3,4) des Hohlstabes (1) wasserdicht verschlossen sind.

9. Hohlstab nach einem der Ansprüche 1 bis 8, dadurch gekennzeichnet, daß die Hohlraumöffnungen (3,4) des Hohlstabes (1) durch selbstklebende, wieder lösbare Folien verschlossen sind.

## Claims

1. Cylindrical hollow rod (1) with an internal bore (2) having a circular cross-section and ending in cavity openings (3,4) at the two end faces of the hollow rod, composed of a shirred packaging tube, in particular of a shirred artificial sausage casing, in combination with a wrapping (5) which surrounds the hollow rod, leaving the cavity openings free, and of an annular body (6) at one of the two cavity openings (3,4), wherein the annular body is an annular disk (6), wherein the inner side face of this disk (6) bears directly against the adjoining end face of the hollow rod (1), wherein the outer side face of the disk is at least partially surrounded by the wrapping (5) and wherein the internal bore of the disk (6) remains free of the wrapping (5) and contains elements (9,10) for fixing the disk to a cylindrical filler pipe.

2. The hollow rod as claimed in claim 1, wherein the radius of the circular internal bore of the disk (6) decreases, preferably conically or in steps, in the direction of the internal bore (2) of the hollow rod (1).

3. The hollow rod as claimed in claim 2, wherein the internal bore of the disk (6) has, at least in a part region of the internal bore, a funnel-shaped side wall which tapers symmetrically to the central longitudinal axis of the hollow rod (1), the radius of the circular internal bore of the disk (6) decreasing in the direction of the internal bore of the hollow rod (1).

4. The hollow rod as claimed in claim 2, wherein the internal bore of the disk (6) has a reduced radius only in part regions.

5. The hollow rod as claimed in claim 4, wherein the internal bore of the disk (6) has a reduced radius due to individual elements (10) distributed over its side wall, such as projections, webs or knobs.

6. The hollow rod as claimed in any of claims 1 to 5, wherein the hollow rod (1) is surrounded by a shrunk-on plastic film which is preferably moisture-impervious.

7. The hollow rod as claimed in any of claims 1 to 6, wherein the hollow rod (1) is surrounded by an elastically deformable material.

8. The hollow rod as claimed in any of claims 1 to 7, wherein the shirred packaging tube is made of cellulose which, due to its increased water content, does not have to be subjected to any further treatment with water before filling with sausage meat, wherein the wrapping (5) is composed of a water-impervious film and wherein the cavity openings (3,4) of the hollow rod are sealed water-tight.

9. The hollow rod as claimed in any of claims 1 to 8, wherein the cavity openings (3,4) of the hollow rod (1) are sealed by self-adhesive films which can be detached again.

## Revendications

1. Tige creuse (1) cylindrique, présentant un perçage intérieur (2) de section circulaire qui se termine par des ouvertures de cavité (3, 4) sur les deux faces terminales de la tige creuse, constituée d'une gaine d'emballage plissée, notamment d'un boyau synthétique plissé de saucisse, en combinaison avec un surenveloppage (5) entourant la tige creuse en laissant libres les ouvertures de cavité, et un corps annulaire (6) à une des deux ouvertures de cavité (3, 4),
caractérisée en ce que le corps annulaire est un disque annulaire (6), en ce que la face latérale intérieure de ce disque (6) s'applique directement contre la face terminale voisine de la tige creuse (1), en ce que la face latérale extérieure du disque est au moins partiellement entourée par le surenveloppage (5) et en ce que le perçage intérieur du disque (6) reste libre de surenveloppage (5) et présente des éléments (9, 10) pour fixer le disque sur un tube de remplissage cylindrique.

2. Tige creuse selon la revendication 1, caractérisée en ce que le rayon du perçage intérieur circulaire du disque (6) diminue, de préférence coniquement ou par gradins, en direction du perçage intérieur (2) de la tige creuse (1).

3. Tige creuse selon la revendication 2, caractérisée en ce que le perçage intérieur du disque (6) possède, au moins dans une région partielle du perçage intérieur, une paroi latérale en entonnoir qui se rétrécit symétriquement par rapport à l'axe longitudinal central de la tige creuse (1), le rayon du perçage intérieur circulaire du disque (6) diminuant en direction du perçage intérieur de la tige creuse (1).

4. Tige creuse selon la revendication 2, caractérisée en ce que le perçage intérieur du disque (6) ne présente un rayon réduit que dans des régions partielles.

5. Tige creuse selon la revendication 4, caractérisée en ce que le perçage intérieur du disque (6) présente un rayon réduit par des éléments individuels (10) répartis sur sa paroi latérale, tels que des saillies vers l'intérieur, des nervures ou des nopes.

6. Tige creuse selon l'une des revendications 1 à 5, caractérisée en ce que la tige creuse (1) est entourée d'un film plastique rétracté, de préférence imperméable à l'humidité.

7. Tige creuse selon l'une des revendications 1 à 6, caractérisée en ce que la tige creuse (1) est entourée d'un matériau élastiquement déformable.

8. Tige creuse selon l'une des revendications 1 à 7, caractérisée en ce que la gaine d'emballage plissée est constituée de cellulose qui, du fait de sa teneur élevée en eau, ne doit pas être soumise à un traitement à l'eau supplémentaire avant de la remplir de chair à saucisses, en ce que le surenveloppage (5) est constitué d'un film imperméable à l'eau et en ce que les ouvertures de cavité (3, 4) de la tige creuse sont fermées de manière étanche à l'eau.

9. Tige creuse selon l'une des revendications 1 à 8, caractérisée en ce que les ouvertures de cavité (3, 4) de la tige creuse (1) sont fermées par des feuilles autocollantes, qui peuvent être décollées.

Fig. 1

Fig. 2

EP 0 365 952 B1

Fig. 3a    Fig. 3        Fig. 4a    Fig. 4        Fig. 5a    Fig. 5

EP 0 365 952 B1

Fig. 6a

Fig. 6

Fig. 7

EP 0 365 952 B1